(19) Europäisches Patentamt
European Patent Office
Office européen des brevets

(11) **EP 0 565 948 B1**

(12) **EUROPEAN PATENT SPECIFICATION**

(45) Date of publication and mention
of the grant of the patent:
**11.06.1997 Bulletin 1997/24**

(51) Int Cl.6: **H04N 5/44**

(21) Application number: **93105324.3**

(22) Date of filing: **31.03.1993**

(54) **Procedure and circuit arrangement for doubling the vertical and horizontal resolution of picture displayed on the screen**

Verfahren und Schaltung zur Verdoppelung der vertikalen und horizontalen Auflösung eines auf einem Bildschirm dargestellten Bildes

Méthode et circuit pour doubler la résolution horizontale et verticale d'une image affichée sur un écran

(84) Designated Contracting States:
**DE FR GB IT NL SE**

(30) Priority: **14.04.1992 FI 921676**

(43) Date of publication of application:
**20.10.1993 Bulletin 1993/42**

(73) Proprietor: **NOKIA TECHNOLOGY GmbH 75175 Pforzheim (DE)**

(72) Inventor: **Salonen, Jouni SF-33820 Tampere (FI)**

(56) References cited:
- **IEEE GLOBAL TELECOMMUNICATIONS CONFERENCE & EXHIBITION, HOLLYWOOD(US), 28-11-88 / 01-12-88, VOLUME 2 OF 3, P. 750-754 'YO-SUNG HO:"VARIABLE-RATE CONTOUR-BASED INTERPOLATIVE VECTOR QUANTIZATION FOR IMAGE CODING"' * page 752, left column, paragraph 4; figures 1,4 ***

## Description

The present invention relates to a method and a circuit arrangement for doubling vertically and horizontally the sample density of a progressive frame sampled orthogonally and displayed on a cathode ray tube, with following steps

- definition of block size
- calculation of operator responses over the pixels of this block and
- directional interpolation using these operator responses in order to define new pixels.

Real time descriptions are used in medicine, referring in the present context to e.g. X-ray and ultrasonic image treatments in which the image of an object to be examined is displayed on a monitor. Similarly, in creating animation images, monitors are used in aid. What is common to these as well as to some other applications is that an image displayed on a monitor is scanned progressively, i.e. the frame is scanned once and that the frame is stationary in character, that is, the motion is small. The problem in said applications, in particular in ultrasonic monitors, is rather the poor image quality, which is due to low resolution, said feature contributing in part to difficulties in drawing conclusions on the image. An obvious solution thereto would be increasing the number of pixels by interpolating a new element in one way or another between the original elements. When this is done both vertically and horizontally a picture with four times of the pixels is obtained. Doubling the number of pixels can be made in two phases, i.e. by increasing the sample density separately both vertically and horizontally.

In the EP application EP-A-0 536 717 published 14.04.93 a method is disclosed for increasing the number of pixels in both directions. According to the method, the pixels of an initial frame form an orthogonal sample pattern. This pattern is first transformed into a quincunx sample pattern by interpolating the first new pixels between the original lines in the first interpolator, so that the new pixels form new incomplete lines. A quincunx sample pattern thus obtained is then transformed into an orthogonal sample pattern by interpolating again in a second interpolator new pixels between the pixels of both the original lines and the new lines so that the density of the pixels both vertically and horizontally has doubled. The method is useful both inside the frame and within the image. In the latter instance the image must be transformed into a progressive non-interlaced frame by means of any method known in the art. No separate edge detection, and consequently, no interpolator selected as a result thereof, is used in said method, nor in most of the methods of prior art; instead, endeavours are made to observe the edge by comparing a sample candidate with those in the adjacency and by setting limitations on the sample value. Exclusion of the edge detection simplifies the methods because fixed algorithms are then utilizable.

However, edge detection is of primary importance in detecting an object. Firstly, the human eye, while taking a look at an unfamiliar object, first observes its outlines. Second, after the outline one makes an analysis of the shape and an identification. Third, a plurality of images, such as monitor images in ultrasonic apparatus, do not contain direct concrete objects; therefore, grasping such images is dependent on the structural properties thereof, this being closely associated with edge detection. One may thus say with reason that edge detection is probably the most important component of an image analysis. When we take a look at an object, we look at the edges and corners in it, and the serration and resolution thereof. It is therefore important to detect the local image content and to interpolate it accordingly. Serration, breaking of the line and indistinct marginal areas, as well as blurring of the details in the image, which is typical of methods employing a fixed algorithm, are greatly dependent on the direction of a marginal area.

An edge adaption method is introduced by T. Doyle et al.. A Direction Dependent Median Filter is used in said method. Edge determination is based on correlation measurements, in which the absolute difference between two samples at each point of time is calculated in an operation window. The dimension, for which the value of the greatest and smallest absolute difference is determined, is used as the correlation measure. If the dimension is small, the responses of the different directions are close to one another, which means that there is no edge to be clearly detectable. If the dimension is great, one may assume that the correlation is high in the direction of the edge and low in other directions, and thus, the direction of the edge can be concluded on the absolute differences. The greatest weakness of the method lies therein that it is not capable of identifying a line of the width of one pixel on an even background.

A sophisticated edge detection method is disclosed in EP application EP-A-0 550 231 published 07.07.93. A 6*3 edge detection window is used therein, with which the edge estimates in the adjacency of a point to be interpolated are calculated. The edge detection is based on summing the absolute difference signals calculated in the window and on the mutual order of magnitude of the response signals thereof. The edges can be detected in nine directions which are 26, 34, 45, 64, 90, 116, 135, 146, and 154 degrees. In the edge detection process, the information is made use of that if there is an edge within the window, the difference between two pixels is very small in the direction of the edge, respectively, it is large beyond the edge. In other words, the minimum response is at a high probability obtainable on the direction of the edge. Although only the line above and below the point to be interpolated is used in interpolation, such pixels are used in defining the interpolation direction which are located on two preceding and two subsequent lines; consequently, a great number of pixels are used in selecting the edge information, altogether 40 pieces of pixels. This leads to a very high probability of the correct edge information. The method described above is intended particularly for use in an interlaced frame and the interpolation is three-dimensional because an input of the frame is also used. The method is, however, unnecessarily heavy if the sample frequency of a progressive frame is to be increased.

Yo-Sung Ho and Allen Gersho describe a method for doubling the sample density of a frame horizontally and vertically in their article "Variable-rate contour-based interpolative vector quantization for image coding" published in the proceedings of the IEEE Global Telecommunications Conference & Exhibition Nov/Dec 1988 in Hollywood, Florida. The method described in this article involves following steps

- definition of a block size of p*p pixels
- calculation of operator responses over the pixels of this block for establishing edge direction information in this block
- interpolation of new samples using the edge direction information.

The calculations described in this article consider a window size of 4*4 pixels and thus can operate with 10 block direction classifications. This method requires a considerable calculation power and speed.

The objective of the present invention is to provide a method for quadrupling the sample frequency of an orthogonal frame, so that the edge areas of a frame produced whereby are not deteriorated, and which method is as simple to implement as possible and requires less calculation power and speed. In the present method the direction of the edge is analysed, and on the basis of the edge information thus obtained, the interpolator to be used is selected. For determining the correct direction of interpolation, reliable edge information about the adjacency of the pixel to be interpolated must be obtained.

The method is characterized in what is stated in claim 1, and the circuit arrangement in what is said in claim 13.

An operator operating in a 3*3 window is used in the method, and there are four operators: vertical, horizontal, positive diagonal, and negative diagonal. When the elements of the window are indicated by references $f_1$, $f_2$, $f_3$ ...$f_9$, where $f_1$ is located in the upper left edge of the window and $f_9$ in the lower right edge of the window, and the other references are in lines in the window, the operators can be written as follows:

horizontal = $\max(|f_5-f_2|,|f_5-f_8|)$ - $\max\_\min(f_4,f_5,f_6)$
vertical = $\max(|f_5-f_4|,|f_5-f_6|)$ - $\max\_\min(f_2,f_5,f_8)$
positive diagonal = $\max(|f_5-f_1|,|f_5-f_9|)$ - $\max\_\min(f_3, f_5,f_7)$
negative diagonal = $\max(|f_5-f_3|,|f_5-f_7|)$ - $\max\_\min(f_1, f_5,f_9)$

In the following the four operators are called:

horizontal = o° direction
vertical = 90° direction
positive diagonal = 45° direction
negative diagonal = 135° direction

The responses of each operator are calculated every time for one pixel, and after they have been calculated, the window is glided onwards and the responses are calculated at a subsequent pixel. So, four responses are calculated at each pixel. Of these four responses, the maximum response is each time selected to be possibly thresholded. If the value of the maximum response is higher than the selected threshold, e.g. 20 to 50, the edge within the window is in the direction of the maximum response. If the value of the maximum threshold is lower than the threshold value, there is no edge within the window. For the edge information, also the direction of the maximum response may advantageously be selected, whereby the threshold value is zero. The process continues in this manner and such 3∗3 window is obtained in which the edge information has been calculated at each element. Three new pixels have to be interpolated at the centremost pixel of the window to be positioned next to the original pixel existing therein. In practice, the window is not actually glided but three successive lines are conducted therein, so that the window remains stationary but the samples glide in it. After calculating the responses and determining the edge information of the pixels of the window, a consistency check is made, according to which the mode of interpolation is determined.

The consistency check can be carried out in a number of ways. According to an advantageous embodiment it is found out which of the directions contains the greatest amount of edge information, and the interpolation is made according to that direction. This can be changed so that the total amount of edge information is calculated and such a condition is set that the there must be more than a given amount of edge information, e.g. 4 pieces of information. If there is less edge information, the frame is assumed to be even and pixel copying can be used. The effect of noise or equivalent can be reduced by setting an additional condition that if the centremost pixel is not an edge pixel but the ones therearound are, also the centremost pixel is set for an edge pixel. Respectively, if the centremost one is an edge pixel but those therearound are not, the centre-most edge pixel is eliminated. This will reduce the effect of noise. After the final piece of edge information has been received, the interpolation is made according to said information.

One of the potential ways of interpolation is to create new values for each new point of the frame using the average values of the adjacent samples and the known samples thus included are determined according to said edge information. This method necessitates, however, a more precise check of the edge information than the method described above. The consistency of the edge information must be checked in each direction and tied to the edge information of the adjacency. The edge information of an individual pixel is not allowed to deviate significantly from the edge information of the vicinity.

The invention is described more in detail, reference being made to the accompanying figures, in which -

Figure 1    presents a 3*3 detection window of an edge and potential directions of the edge,

Figure 2    presents how the window is moved for determining the edge information of one pixel,

Figure 3    presents a detection window with the known samples in it,

Figure 4    illustrates pixels used for interpolation and the manner of interpolation at various pieces of edge information,

Figure 5    illustrates an alternative method of interpolation at various pieces of edge information.

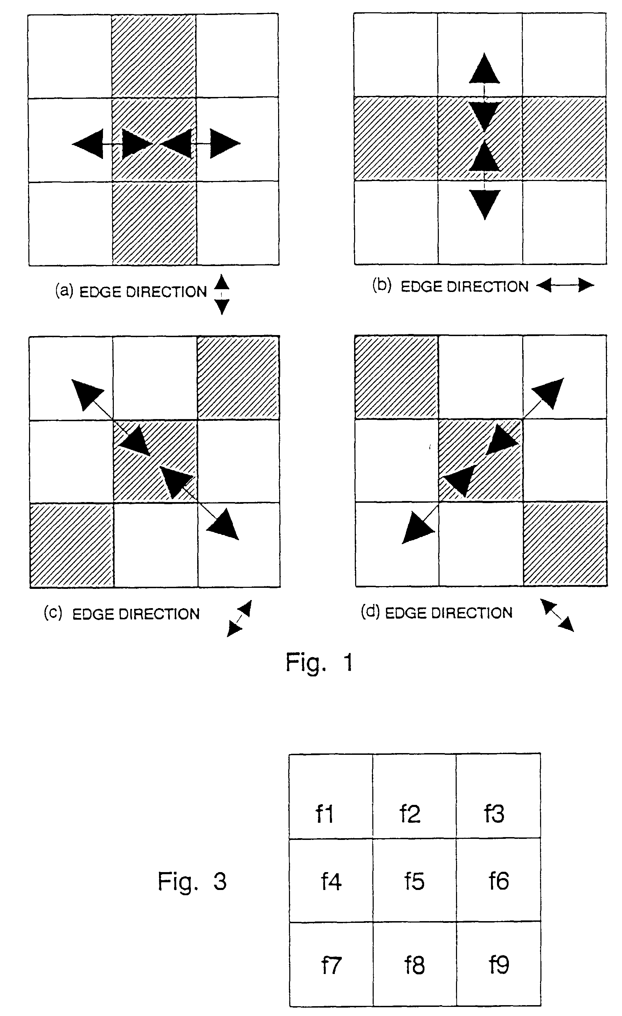

Figure 1 presents the directions, the edge located wherein can be detected with the 3*3 mask used herein. In Figure a the edge is in vertical direction, in Figure b the edge is in horizontal direction, in Figure c the edge is determined to be positively diagonal and in Figure c, negatively diagonal.

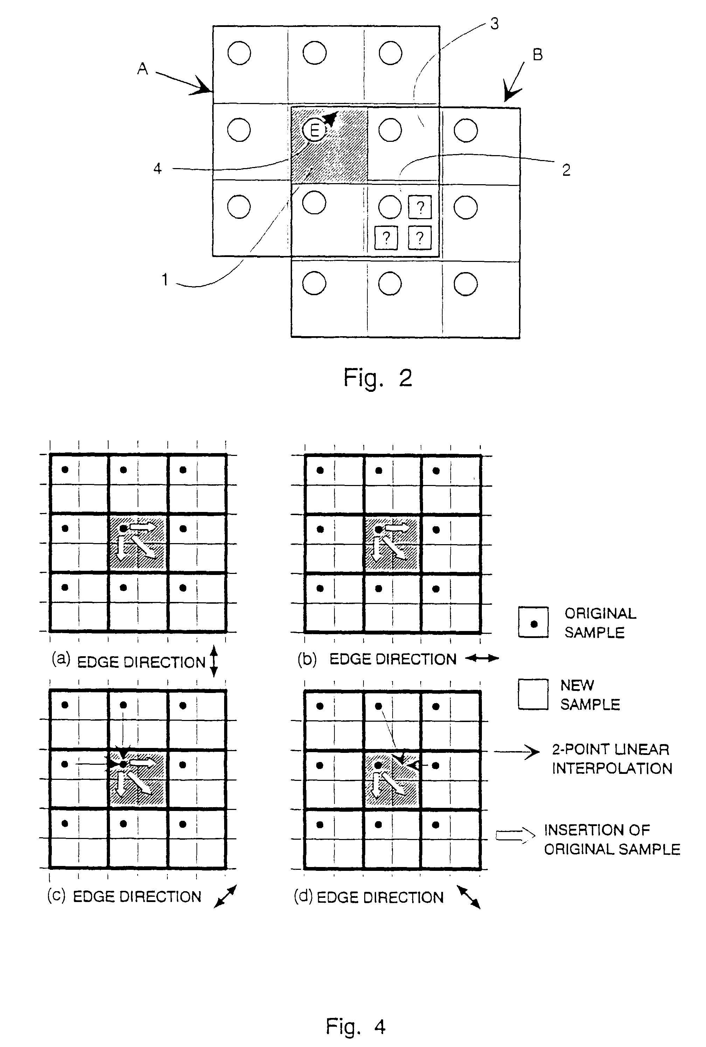

Figure 2 illustrates how a 3*3 window is moved for calculating the edge information. The circles indicate the known pixels of a progressive frame, and squares with a question mark therein denote pixels which must be interpolated for doubling the sample density. In the frame presented here such a case is analysed in which said pixels will be interpolated, and in fact, three additional pixels have to be interpolated into each square. If new pixels are desired to be interpolated in square 2 using the known pixel of this square and the immediately adjacent known pixels, the edge information of each pixel, i.e. the edge information concerning each known pixel indicated with a circle of the 3*3 window B must be disclosed. The 3*3 window A is used in calculating the edge information by gliding from the left to the right and downwards in the frame, that is, in practice, the samples of three successive lines form the input of the window. When the edge information of the pixel in screen 1, indicated by letter E within a circle, has to be calculated, the window A is in the position shown in the figure. When the edge information of the pixel of screen 2 has to be calculated, the window A is glided by one pixel to the right. In this manner the edge information for all pixels in window B are calculated.

Let us assume now that window A is in position as in Fig. 2. There are nine known pixels within the window which can be indicated by letters $f_1$, $f_2$, $f_3$, $f_4$, $f_5$, $f_6$, $f_7$, $f_8$ and $f_9$, corresponding to the window in Fig. 3. The piece of edge information E of pixel $f_5$, corresponding in Fig. 2 by a circle in screen 1, must be determined. The detection of the edge is made by means of four operators operating in said 3*3 window, accomplishing the following operations:

$$\text{horizontal} = \max(|f_5\text{-}f_2|, |f_5\text{-}f_8|) - \max\_\min(f_4, f_5, f_6)$$
$$\text{vertical} = \max(|f_5\text{-}f_4|, |f_5\text{-}f_6|) - \max\_\min(f_2, f_5, f_8)$$
$$\text{positive diagonal} = \max(|f_5\text{-}f_1|, |f_5\text{-}f_9|) - \max\_\min(f_3, f_5, f_7)$$
$$\text{negative diagonal} = \max(|f_5\text{-}f_3|, |f_5\text{-}f_7|) - \max\_\min(f_1, f_5, f_9)$$

As the result of the operation of the operators, responses in four directions, shown in Fig. 1, are received. As can be seen, there are four operators: vertical, horizontal, positive diagonal (45°) and negative diagonal (135°). The responses of each operator are thus calculated with the aid of the absolute differences and the functions max( ) and max_min( ). Max( ) yields the highest value of the two inputs (the absolute value of the differences) and max_min ( ) yields the difference between the highest and the lowest input value. The response of the operator calculated therewith in each direction is thus the difference of max( ) and max_min( ). The principle is that the first term of the operator analyses what the change is when passing over the direction to be analysed and what the change is in the direction of the analysis. If the first term is great and the latter one small, there is a great probability that the edge is in said direction.

When the responses have been calculated at one pixel, for instance at pixel 1 in Fig. 2, in the manner described above, one of the four response values must be picked for the final direction value. One of the possibilities is to select the highest response value and to threshold it in an appropriate manner for the selected threshold value. If the response value exceeds the threshold value, i.e. the output from the thresholder is logical 1, the decision will be that the edge at this pixel within the window is in the direction indicated by the highest response value. If the output is logical 0, the decision will be that at this point within the window there is no edge, i.e. the frame is even. An appropriate threshold value could be in the range 20 to 50, and it is defined empirically using a frame sequence. Another, a better method, used below in the description, is that, simply, the highest response value is selected and a decision is made that the edge is in the direction thereof. This, in fact, means that the threshold value is zero. Let the highest response value be in direction positive diagonal (45°) and the direction information of this edge is recorded. It is conceivable that there is no distinct edge at all, whereby information "no edge" is stored in the memory. The direction of the edge at pixel 1 in Fig. 2 is indicated by arrow 4.

In the manner described above the edge information of each known pixel of window B is calculated by moving window A, that is, the direction of the edge is determined at each pixel. After doing this, a consistency check is carried out. In the check, which in practice is lowpass filtering, the interpolation direction is selected according to which new pixels are interpolated next to the centremost pixel of the window, said new pixels in 3*3 window B being indicated with a question mark in square 2. The consistency check can be carried out e. g. as follows:

- the total number N of the pieces of edge information in 3*3 frame B is calculated, i.e. it is calculated how many pieces of direction information there are in different directions, and the figures are summed, i.e.,

$$N = \Sigma \text{vertical direction} + \Sigma \text{horizontal direction} +$$

$$\Sigma \text{positive diagonal} + \Sigma \text{negative diagonal}$$

It is a matter of course that the highest value of figure N is 9 because the window contains 9 pixels for which the calculations on edge information were made. If the figure N is below 4, the frame area of the window is considered to be even, so that simply pixel copying can be used, i.e. for the samples indicated with question mark (?) the centremost pixel of the window is transferred. If the figure N is equal as or greater than that, calculations are made in which of the groups $\Sigma$vertical direction, $\Sigma$horizontal direction, $\Sigma$positive diagonal, $\Sigma$negative diagonal there is the greatest amount of edge information, and inteprolation is carried out in that direction. For instance, if the group $\Sigma$positive diagonal is greatest, the interpolation is carried out in direction 45°.

The selection of an interpolation direction can be made also in a different way from the one described above.

When the direction of interpolation has been selected with the aid of edge information, the interpolation of the new pixels is carried out. This is preferably done as in the embodiment shown in Fig. 4. Figures 4a, b, c nd d show how new pixels are interpolated in the direction calculated on the basis of the edge information. The thin arrows show the two-point linear interpolation and the darker arrows a displacement of the original sample. The square with a black point therein denotes the original sample and the square with no point the sample to be interpolated. If the vertical or horizontal direction has become the direction of the edge in the consistency check, new samples are formed simply by shifting the value of the original sample into them, as shown by figures a and b. If the direction of the edge is now positive diagonal (45°), the new samples of Fig. c are formed by moving the value of the original sample thereto whereas the original sample is replaced by the average (two-point linear interpolation) of the original sample thereabove and on the left thereof. If the negative diagonal (135°) has become the direction of the edge, the new samples of Fig. d are formed which constitute the samples of the new line, by moving the value of the original sample into them and a sample entering next to the original sample is formed with the average of the original sample above and on the right side of the original sample (two-point linear interpolation).

In the manner described above, new samples can be interpolated by moving the 3*3* window, by calculating the edge information, and by making a consistency check so that the sample density of the original progressive frame has become doubled. With the manner of interpolation described above the frame is neither blurred nor do any step-wise errors arise. If desired, an edge highlight can be connected with the interpolation, i.e. the dark edges are made darker and the bright edges brighter.

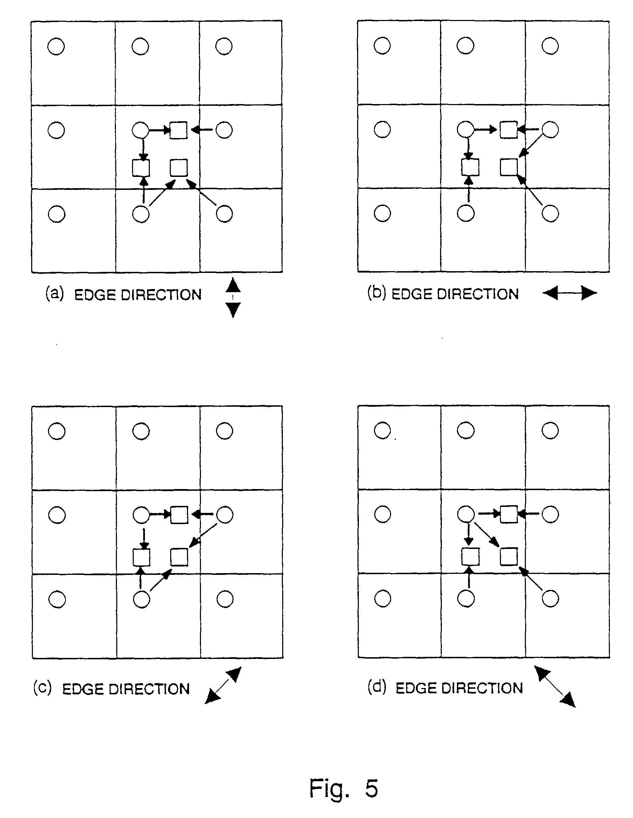

A second interpolation embodiment is presented in Fig. 5. In this method new sample values are created for each sample, so that no sample displacement is used as in the embodiment of Fig. 4. In addition, the original sample has been preserved. The arrows in Figs 5a-5d imply that the average of the known samples of their starting points is a new sample interpolated at the tips of the arrows. If the consistency check has indicated that the direction of the edge is "vertical", a new sample is interpolated on the same line on the right-hand side of the original sample, as shown in Fig. 5a, as an average of the known adjacent samples, directly therebelow is interpolated a new sample on a new line as an average of the known adjacent samples of the vertical direction, and a third sample to be formed diagonally therebelow on a new line is obtained as an average of the known adjacent samples of the line there-below.

If the direction of the edge is horizontal, samples as those in Fig. 5b are formed in the same way as in Fig. 5a, except that the third interpolated sample is obtained as an average of the known adjacent samples of the subsequent vertical line.

If the edge direction is positive diagonal, a new sample is formed, as shown in Fig. 5c, on the same line next thereto as an average of the known adjacent samples of said line. Directly therebelow, a sample is produced on a new line as an average of the known samples thereabove and below, and on a new line diagonally below is formed a new sample as an average of the known samples in positive diagonal direction. Finally, if the direction of the edge is a negative diagonal, new samples are produced so that subsequent to a known sample a new sample is produced as an average of the known adjacent samples of the same line thereof, a lower sample on a new line is formed as an average of the known samples thereabove and below. A third new sample is formed diagonally downwards on a new line as an average of the known samples in negative diagonal direction. Thus, the last two cases differ only in relation to the formation of the latter sample of the new line.

In all instances of Figs 5a - 5b the original samples have been preserved so in this respect it is possible to imitate a frame conforming to the HDTV norm, in which the quincunx subsampled frame is returned to orthogonal. Interpolation according to said figures is more difficult to carry out than the one shown in Fig. 4, and it prerequires a closer checking of the edge information than in the instance shown in Fig. 4. The consistency of the edge information must be checked in all directions and tied to the edge information of the vicinity. The edge information of an individual pixel is not allowed to deviate significantly from the edge information of the adjacency.

The claims also concern a circuit arrangement with which the method described above can be implemented. It is obvious to a person skilled in the art that an implementation can be accomplished, while remaining within the protective scope, in a number of ways utilizing digital signal processors, interpolators and line memories, so that a detailed description of the circuit is not considered to be necessary here.

Staying within the scope of the claims the method can be implemented in a number of ways. After determining the edge information, the consistency check can be accomplished in ways other than those described above and the known pixels accepted for interpolation may also be selected differently. The consistency of the edge information thus obtained can be verified in a manner known by those skilled in the art. The essential feature is that the responses are calculated as introduced in the 3*3 window.

## Claims

1. A method for doubling vertically and horizontally the sample density of a progressive frame sampled orthogonally and displayed on a cathode ray tube, with following steps

   - definition of a block size
   - calculation of operator responses over the pixels of this block and
   - directional interpolation using these operator responses in order to define new pixels

   characterized in that

   - three successive lines at one point of time are conducted simultaneously into a 3*3 window, whereby on the first line of the window there are momentarily three successive samples $f_1$, $f_2$, and $f_3$ of the first line, on the second line three successive samples $f_4$, $f_5$, and $f_6$ of the subsequent line, and on the third line, three successive samples $f_7$, $f_8$ and $f_9$ of the third line,
   - operator responses are calculated at each sample of the window from the window sample values in four directions, said operators meeting the formulae

   $$0° \text{ direction} = \max(|f_5\text{-}f_2|,|f_5\text{-}f_8|) \text{ - max\_min}$$

   $$(f_4,f_5,f_6)$$
   $$90° \text{ direction} = \max(|f_5\text{-}f_4|,|f_5\text{-}f_6|) \text{ - max\_min}(f_2,f_5,f_8)$$
   $$45° \text{ direction} = \max(|f_5\text{-}f_1|,|f_5\text{-}f_9|) \text{ - max\_min}(f_3,f_5,f_7)$$
   $$135° \text{ direction} = \max(|f_5\text{-}f_3|,|f_5\text{-}f_7|) \text{ - max\_min}(f_1,f_5,f_9)$$

   in which 0° direction refers to the horizontal line direction and max_min( ) refers to the difference of the highest and lowest value in the brackets,

   - the direction for the edge information of the centremost sample $f_5$ of the window, which has the greatest operator response, is selected, whereby the edge information detects the direction of the edge in the frame at the centremost sample $f_5$,
   - the previous step is applied to every other sample of the window in order to select the direction for the edge information of each of said sample,
   - a consistency check is carried out in the 3*3 window, in which the edge information of the samples is known, concerning the edge information of the centremost sample on the basis of the amount of edge information of the window samples, whereby the final edge information of the centremost sample $f_5$ is obtained,
   - according to the final edge information thus obtained, the interpolation directions are selected, wherein one new sample after the centremost sample on the same line, and the successive second and third new samples on a new line formed after the preceding line so that the second new sample is in the same horizontal position as the centremost sample are interpolated in said selected directions.

2. Method according to claim 1, characterized in that the value of the highest operator response is compared with a threshold value, and as it exceeds the threshold value, for the edge information of the centremost sample is set the direction of the highest operator response, and when it is below the threshold value, there will not be any edge information.

3. Method according to claim 2, characterized in that the threshold value is in the range 20 to 50.

4. Method according to claim 1 or 2, characterized in that in checking the consistency of the edge information - it is calculated how often pixels with same edge information occur in each direction 0°, 90°, 45° and 135° in a window, and the direction is selected for the final edge information of the centremost sample of the window which occurs most often.

5. Method according to claim 4, characterized in that the total amount N of the edge information occurances in the 3*3 window samples in 4 directions is calculated and if the number N is higher than the figure used to select the final edge information of the centremost sample, the selected final edge information is accepted.

6. Method according to claim 1 or 4, characterized in that when the final edge information yields 0° direction or 90° direction for the direction of the edge, new samples are formed by setting the value of the centremost sample as the value thereof.

7. Method according to claim 1 or 4, characterized in that when the final edge information yields 45° direction for the direction of the edge, a first, second and third new sample are formed by setting the value of the centremost sample of the window for their value and the average of the known sample thereabove and to the left thereof is substituted for the centremost sample.

8. Method according to claim 1 or 4, characterized in that when the final edge information yields 135° direction for the direction of the edge, a second and third new sample are formed by setting the value of the centremost sample for the value thereof, and a first new sample is formed as an average of the known sample above the centremost sample and of the known sample on the righthand side thereof.

9. Method according to claim 1 or 4, characterized in that when the final edge information yields 90° direction for the direction of the edge, a first new sample is interpolated as an average of the known immediate adjacent samples of the same line, a second new sample is interpolated as an average of the known immediate adjacent samples of the vertical direction, and a third new sample is derived as an average of the known immediate adjacent samples of the line therebelow.

10. Method according to claim 1 or 4, characterized in that when the final edge information yields 0° direction for the direction of the edge, a first new sample is interpolated as an average of the known immediate adjacent samples of the same line, a second new sample is interpolated as an average of the known immediate adjacent samples of the vertical direction, and a third new sample is derived as an average of the known immediate adjacent samples of the subsequent vertical line.

11. Method according to claim 1 or 4, characterized in that when the final edge information yields 45° direction for the direction of the edge, a first new sample is interpolated as an average of the known immediate adjacent samples of the same line, a second new sample is interpolated as an average of the immediate known adjacent samples in the same vertical direction, and a third new sample is interpolated as an average of the immediate known adjacent samples in 45° direction.

12. Method according to claim 1 or 4, characterized in that when the final edge information yields 135° direction for the direction of the edge, a first new sample is interpolated as an average of the known immediate adjacent samples of the same line, a second new sample is interpolated as an average of the immediate known adjacent samples in the same vertical direction, and a third new sample is interpolated as an average of the immediate known adjacent samples in 135° direction.

13. A circuit arrangement for doubling vertically and horizontally the sample density of a progressive frame sampled orthogonallly and displayed on a cathode ray tube, comprising means adapted for

- the definition of a block size
- the calculation of operator responses over the pixels of this block and
- the directional interpolation using these operator responses in order to define new pixels

characterized in that the circuit comprises

- a first circuit operating in a 3*3 sample window, the input thereof comprising simultaneously, whereby on the first line of the window there are momentarily three successive samples $f_1$, $f_2$ and $f_3$ of the first line, on the second line three successive samples $f_4$, $f_5$, and $f_6$ of the subsequent line, and on the third line, three successive samples $f_7$, $f_8$ and $f_9$ of the third line,
- a calculation circuit for operator responses from the window sample values in four directions, which calculates at each sample of the window the operator responses according to the formulae

$$0° \text{ direction} = \max(|f_5\text{-}f_2|, |f_5\text{-}f_8|) - \max\_\min(f_4, f_5, f_6)$$
$$90° \text{ direction} = \max(|f_5\text{-}f_4|, |f_5\text{-}f_6|) - \max\_\min(f_2, f_5, f_8)$$
$$45° \text{ direction} = \max(|f_5\text{-}f_1|, |f_5\text{-}f_9|) - \max\_\min(f_3, f_5, f_7)$$
$$135° \text{ direction} = \max(|f_5\text{-}f_3|, |f_5 \ f_7|) - \max\_\min(f_1, f_5, f_9),$$

in which 0° direction refers to the horizontal line direction and max_min( ) refers to the difference of the highest and lowest value in the brackets,

- a selection circuit for the edge information of

the centremost sample $f_5$ and every other sample of the window which selects the direction with the greatest operator response at each of said samples,

- a circuit for checking consistency operating in the 3*3 window concerning the edge information of the centremost sample $f_5$ on the basis of the amount of edge information of the window samples, whereby the output forms the final edge information of the centremost sample $f_5$,

- interpolators which interpolate in said selected directions on the basis of the final edge information thus obtained, one new sample after the centremost sample on the same line, and the successive second and third new samples on a new line formed after the preceding line so that the second new sample is in the same horizontal position as the centremost sample.

14. Circuit arrangement according to claim 13, characterized in that a comparator means has been connected to the calculation circuit of the operator responses, the inputs thereof being the value of the highest operator response and the selected threshold value, and when the value of the response exceeds the threshold value, the output of the comparator means sets the direction information of the highest operational response for the edge information of the centremost sample of the first window.

15. Circuit arrangement according to claim 13 and 14, characterized in that a circuit connected to the second window, checking the consistency of the edge information, calculates how often pixels with same edge information occur in each direction 0°, 90°, 45° and 135° in a window, and the output of the circuit sets for the final edge information of the centremost sample of the window the direction which occurs most often.

16. Circuit arrangement according to claim 13 or 15, characterized in that when the output of the circuit checking the consistency of the edge information has set 0° direction or 90° direction for the final edge information of the centremost sample of the second window, the interpolator sets the value of the centremost sample for the value of the first, second and third new sample of the second window.

17. Circuit arrangement according to claim 13 or 15, characterized in that when the output of the circuit checking the consistency of the edge information has set 45° direction for the final edge information of the centremost sample of the second window, the interpolator sets the value of the centremost sample of the window for the value of the first, second and third new sample, and the output of the two-point interpolator, its inputs being the known sample above and on the left-hand side of the centremost smaple of the second window, is the new value of the centremost sample.

18. Circuit arrangement according to claim 13 or 15, characterized in that when the output of the circuit checking the consistency of the edge information has set 135° direction for the final edge information of the centremost sample of the second window, the interpolator shifts the value of the centremost sample for the second and third new sample, and the output of the two-point interpolator, its input being the known samples above and on the right-hand side of the centremost sample, is the value of the first new sample.

19. Circuit arrangement according to claim 13, characterized in that when the output of the circuit checking the consistency of the edge information has set 90° direction for the final edge information of the centremost sample, the value of the first new sample is the output of the two-point interpolator in which the inputs are the centremost known sample and one thereafter, the value of the second new sample is the output of the two-point interpolator in which the inputs are the centremost sample and a known sample therebelow, and the value of a third new sample is the output of the two-point interpolator in which the inputs are the sample below the centremost sample and a subsequent known sample.

20. Circuit arrangement according to claim 13, characterized in that when the circuit checking the consistency of the edge information has set 0° direction for the final edge information of the centremost sample, a first new sample is the value of the output of the two-point interpolator in which the inputs are the centremost sample and the subsequent known sample, a second new sample is the value of the output of the two-point interpolator in which the inputs are the centremost sample and the known sample therebelow, and the third sample is the value of the output of the two-point interpolator in which the inputs are the centremost sample and the known sample in a subsequent horizontal position in the subsequent line.

21. Circuit arrangement according to claim 13, characterized in that when the circuit checking the consistency of the edge information yields 45° direction for the final edge information, a first new sample is the value of the output of the two-point interpolator in which the inputs are the centremost sample and the subsequent known sample, a second new sample is the value of the output of the two-point interpolator in which the inputs are the centremost sample and the known adjacent sample in the same vertical line therebelow, and a third new sample is the value of the output of the two-point interpolator in which the inputs are the immediate known adjacent samples of said new sample in 45° direction.

22. Circuit arrangement according to claim 13, characterized in that when the circuit checking the consistency of the edge information yields 135° direction for the final edge information, a first new sample is the value of the output of the two-point interpolator in which the inputs are the centremost sample and the subsequent known sample, a second new sample is the value of the output of the two-point interpolator in which the inputs are the centremost sample and the known adjacent sample in the same vertical line therebelow, and a third new sample is the value of the output of the two-point interpolator in which the inputs are the immediate known adjacent samples of said new sample in 135° direction.

## Patentansprüche

1. Ein Verfahren zum vertikalen und horizontalen Verdoppeln der Probendichte eines orthogonal abgetasteten und auf einer Kathodenstrahlröhre dargestellten fortschreitenden Bildes, wobei sich das besagte Verfahren auf die folgenden Schritte erstreckt:

- Festlegung einer Blockgröße
- Berechnung der Operatoransprechwerte hinsichtlich der Bildelemente dieses Blocks und
- Richtungsinterpolation an Hand dieser Operatoransprechwerte zwecks Festlegung neuer Bildelemente

dadurch gekennzeichnet, daß

- drei aufeinanderfolgende Zeilen zu einem Zeitpunkt gleichzeitig in ein 3*3-Fenster geleitet werden, so daß sich in der ersten Zeile des Fensters vorübergehend drei aufeinanderfolgende Proben $f_1$, $f_2$ und $f_3$ der ersten Zeile, in der zweiten Zeile drei aufeinanderfolgende Proben $f_4$, $f_5$ und $f_6$ der nächsten Zeile und in der dritten Zeile drei aufeinanderfolgende Proben $f_7$, $f_8$ und $f_9$ der dritten Zeile befinden,
- im Zusammenhang mit jeder Fensterprobe Operatoransprechwerte auf Grund der Fensterprobenwerte in vier Richtungen berechnet werden, wobei die besagten Operatoren den Formeln

$$\text{Richtung } 0° = \max(|f_5-f_2|, |f_8-f_8|) - \text{max\_min}(f_4, f_5, f_6)$$

$$\text{Richtung } 90° = \max(|f_5-f_4|, |f_8-f_6|) - \text{max\_min}(f_2, f_5, f_8)$$

$$\text{Richtung } 45° = \max(|f_5-f_1|, |f_8-f_9|) - \text{max\_min}(f_3, f_5, f_7)$$

$$\text{Richtung } 135° = \max(|f_5-f_3|, |f_8-f_7|) - \text{max\_min}(f_1, f_5, f_9)$$

entsprechen, wobei sich die Richtung 0° auf die horizontale Zeilenrichtung bezieht und max_min() dem Unterschied zwischen dem höchsten und dem niedrigsten Wert in den Klammern entspricht,

- die Richtung für die Randinformationen der mittelsten Fensterprobe $f_5$, deren Operatoransprechwert am höchsten ist, gewählt wird, wodurch die Randinformation die Randrichtung in dem Bild in der mittelsten Probe $f_5$ ermittelt,
- der vorhergehende Schritt bei jeder zweiten Fensterprobe durchgeführt wird, um die Richtung für die Randinformation jeder der besagten Proben zu wählen, und in dem 3*3-Fenster, in dem die Randinformation der Proben bekannt ist, eine Übereinstimmungskontrolle hinsichtlich der Randinformation der mittelsten Probe aufgrund der Randinformationsmenge der Fensterproben durchgeführt wird, wodurch die endgültige Randinformation der mittelsten Probe $f_5$ gewonnen wird,
- im Einklang mit der auf diese Weise gewonnenen endgültigen Randinformation die Interpolationsrichtungen gewählt werden, wobei nach der mittelsten Probe in der gleichen Zeile eine neue Probe und in einer nach der vorhergehenden Zeile gebildeten neuen Zeile die darauffolgenden zweiten und dritten neuen Proben in den besagten gewählten Richtungen interpoliert werden, so daß sich die zweite neue Probe in der gleichen horizontalen Lage befindet wie die mittelste Probe.

2. Verfahren nach Anspruch 1, dadurch gekennzeichnet, daß der Wert des höchsten Operatoransprechwerts mit einem Schwellwert verglichen wird und, wenn der besagte Ansprechwert den Schwellwert überschreitet, die Richtung des höchsten Operatoransprechwerts hinsichtlich der Randinformation der mittelsten Probe eingestellt wird, und, wenn der besagte Ansprechwert geringer ist als der Schwellwert, keine Randinformation vorhanden ist.

3. Verfahren nach Anspruch 2, dadurch gekennzeichnet, daß der Schwellwert zwischen 20 und 50 beträgt.

4. Verfahren nach Anspruch 1 oder Anspruch 2, dadurch gekennzeichnet, daß im Zuge der Übereinstimmungskontrolle hinsichtlich der Randinformation berechnet wird, wie oft in jeder Richtung 0°, 90°, 45° und 135° in einem Fenster Bildelemente mit der gleichen Randinformation auftauchen, und die Richtung der am häufigsten auftauchenden endgültigen Randinformation der mittelsten Fensterprobe gewählt wird.

5. Verfahren nach Anspruch 4, dadurch gekennzeichnet, daß die Gesamtanzahl N der in den 3*3-Fensterproben in vier Richtungen auftauchenden Randinformationen berechnet wird und daß, wenn die Anzahl N höher ist als die zwecks Wahl der endgültigen Randinformation der mittelsten Probe benutzte Anzahl, die gewählte endgültige Randinformation angenommen wird.

6. Verfahren nach Anspruch 1 oder Anspruch 4, dadurch gekennzeichnet, daß neue Proben, wenn die endgültige Randinformation hinsichtlich der Randrichtung der Richtung 0° oder der Richtung 90° entspricht, durch Einstellen des Wertes der mittelsten Probe als deren Wert gebildet werden.

7. Verfahren nach Anspruch 1 oder Anspruch 4, dadurch gekennzeichnet, daß eine erste, eine zweite und eine dritte Probe, wenn die endgültige Randinformation hinsichtlich der Randrichtung der Richtung 45° entspricht, durch Einstellen des Wertes der mittelsten Fensterprobe als deren Wert gebildet werden, und der Mittelwert aus der bekannten darüber befindlichen Probe und der links davon befindlichen Probe für die mittelste Probe substituiert wird.

8. Verfahren nach Anspruch 1 oder Anspruch 4, dadurch gekennzeichnet, daß eine zweite und eine dritte neue Probe, wenn die endgültige Randinformation hinsichtlich der Randrichtung der Richtung 135° entspricht, durch Einstellen des Wertes der mittelsten Probe als deren Wert gebildet werden, und eine erste neue Probe als Mittelwert aus der bekannten Probe oberhalb der mittleren Probe und der bekannten Probe rechts davon gebildet wird.

9. Verfahren nach Anspruch 1 oder Anspruch 4, dadurch gekennzeichnet, daß eine erste neue Probe, wenn die endgültige Randinformation hinsichtlich der Randrichtung der Richtung 90° entspricht, als Mittelwert aus den bekannten unmittelbar angrenzenden Proben in der gleichen Zeile interpoliert wird, eine zweite neue Probe als Mittelwert aus den bekannten unmittelbar angrenzenden Proben in der vertikalen Richtung interpoliert wird und eine dritte neue Probe als Mittelwert aus den bekannten unmittelbar angrenzenden Proben in der darunter befindlichen Zeile abgeleitet wird.

10. Verfahren nach Anspruch 1 oder Anspruch 4, dadurch gekennzeichnet, daß eine neue Probe, wenn die endgültige Randinformation hinsichtlich der Randrichtung der Richtung 0° entspricht, als Mittelwert aus den bekannten unmittelbar angrenzenden Proben in der gleichen Zeile interpoliert wird, eine zweite neue Probe als Mittelwert aus den bekannten unmittelbar angrenzenden Proben in der vertikalen Richtung interpoliert wird und eine dritte neue Probe als Mittelwert aus den bekannten unmittelbar angrenzenden Proben der nächsten in der vertikalen Richtung befindlichen Zeile abgeleitet wird.

11. Verfahren nach Anspruch 1 oder Anspruch 4, dadurch gekennzeichnet, daß eine erste neue Probe, wenn die endgültige Randinformation hinsichtlich der Randrichtung der Richtung 45° entspricht, als Mittelwert aus den bekannten unmittelbar angrenzenden Proben in der gleichen Zeile interpoliert wird, eine zweite neue Probe als Mittelwert aus den unmittelbar bekannten angrenzenden Proben in der in der gleichen vertikalen Richtung interpoliert wird und eine dritte neue Probe als Mittelwert aus den bekannten unmittelbar angrenzenden Proben in der Richtung 45° interpoliert wird.

12. Verfahren nach Anspruch 1 oder Anspruch 4, dadurch gekennzeichnet, daß eine erste neue Probe, wenn die endgültige Randinformation hinsichtlich der Randrichtung der Richtung 135° entspricht, als Mittelwert aus den bekannten unmittelbar angrenzenden Proben in der gleichen Zeile interpoliert wird, eine zweite neue Probe als Mittelwert aus den unmittelbar bekannten angrenzenden Proben in der gleichen vertikalen Richtung interpoliert wird, und eine dritte neue Probe als Mittelwert aus den bekannten unmittelbar angrenzenden Proben in der Richtung 135° interpoliert wird.

13. Eine Schaltungsanordnung zum vertikalen und horizontalen Verdoppeln der Probendichte eines orthogonal abgetasteten und auf einer Kathodenstrahlröhre dargestellten fortschreitenden Bildes, umfassend Mittel zur

- Festlegung einer Blockgröße
- Berechnung von Operatoransprechwerten hinsichtlich der Bildelemente dieses Blocks und
- Richtungsinterpolation auf Grund dieser Operatoransprechwerte zwecks Festlegung neuer Bildelemente

dadurch gekennzeichnet, daß die Schaltung folgende Teile umfaßt:

- eine erste in einem 3*3-Probenfenster wirkende Schaltung, deren Eingang gleichzeitig so beaufschlagt wird, daß sich in der ersten Zeile des Fensters vorübergehend drei aufeinanderfolgende Proben $f_1$, $f_2$ und $f_3$ der ersten Zeile, in der zweiten Zeile drei aufeinanderfolgende Proben $f_4$, $f_5$ und $f_6$ der darauffolgenden Zeile

und in der dritten Zeile drei aufeinanderfolgende Proben $f_7$, $f_8$ und $f_9$ der dritten Zeile befinden,

- eine Schaltung zum Berechnen von Operatoransprechwerten aufgrund der Fensterprobenwerte in vier Richtungen, wobei die besagte Berechnungsschaltung hinsichtlich jeder Fensterprobe die Operatoransprechwerte im Einklang mit den Formeln

$$\text{Richtung } 0° = \max(|f_5-f_2|, |f_5-f_8|) - \text{max\_min}(f_4, f_5, f_6)$$
$$\text{Richtung } 90° = \max(|f_5-f_4|, |f_5-f_6|) - \text{max\_min}(f_2, f_5, f_8)$$
$$\text{Richtung } 45° = \max(|f_5-f_1|, |f_5-f_9|) - \text{max\_min}(f_3, f_5, f_7)$$
$$\text{Richtung } 135° = \max (|f_5-f_3|, |f_5-f_7|) - \text{max\_min}(f_1, f_5, f_9)$$

berechnet, wobei sich die Richtung 0° auf die horizontale Zeilenrichtung bezieht und max_min( ) dem Unterschied zwischen dem höchsten und dem niedrigsten Wert in den Klammern entspricht,

- eine Wählschaltung für die Randinformation der mittelsten Probe $f_5$ und jede andere Fensterprobe, die im Zusammenhang mit jeder der besagten Proben die Richtung mit dem höchsten Operatoransprechwert wählt,
- eine in dem 3*3-Fenster wirkende Übereinstimmungskontrollschaltung zum Prüfen der Randinformation der mittelsten Probe $f_5$ aufgrund der Randinformationsmenge der Fensterproben, wobei der Ausgang dieser Schaltung die endgültige Randinformation der mittelsten Probe $f_5$ bildet,
- Interpolatoren, die in den besagten gewählten Richtungen aufgrund der endgültigen auf diese Weise gewonnenen Randinformation eine neue Probe nach der mittelsten Probe in der gleichen Zeile und die darauffolgenden zweiten und dritten neuen Proben in einer neuen nach der vorhergehenden Zeile gebildeten Zeile interpolieren, so daß sich die zweite neue Probe in der gleichen horizontalen Lage befindet wie die mittelste Probe.

14. Schaltungsanordnung nach Anspruch 13, dadurch gekennzeichnet, daß ein Vergleichsmittel an die Berechnungsschaltung für die Operatoransprechwerte angeschlossen ist, wobei die Eingänge des besagten Vergleichsmittels dem Wert des höchsten Operatoransprechwerts und des gewählten Schwellwerts entsprechen und wobei, wenn der Wert des Ansprechwerts den Schwellwert überschreitet, der Ausgang des Vergleichsmittels die Richtungsinformation des höchsten Operatoransprechwerts hinsichtlich der Randinformation der mittelsten Probe des ersten Fensters einstellt.

15. Schaltungsanordnung nach Anspruch 13 und Anspruch 14, dadurch gekennzeichnet, daß eine an das zweite Fenster angeschlossene, die Übereinstimmung der Randinformation kontrollierende Schaltung berechnet, wie oft in jeder Richtung 0°, 90°, 45° und 135° Bildelemente mit der gleichen Randinformation in einem Fenster auftauchen und der Ausgang der Schaltung hinsichtlich der endgültigen Randinformation der mittelsten Fensterprobe die am häufigsten vollkommene Richtung einstellt.

16. Schaltungsanordnung nach Anspruch 13 oder Anspruch 15, dadurch gekennzeichnet, daß der Interpolator, wenn der Ausgang der die Übereinstimmung der Randinformation kontrollierenden Schaltung die Richtung 0° oder die Richtung 90° hinsichtlich der endgültigen Randinformation der mittelsten Probe des zweiten Fensters eingestellt hat, den Wert der mittelsten Probe als den Wert der ersten, der zweiten und der dritten neuen Probe des zweiten Fensters einstellt.

17. Schaltungsanordnung nach Anspruch 13 oder Anspruch 15, dadurch gekennzeichnet, daß der Interpolator, wenn der Ausgang der die Übereinstimmung der Randinformation kontrollierenden Schaltung hinsichtlich der endgültigen Randinformation der mittelsten Probe des zweiten Fensters die Richtung 45° eingestellt hat, den Wert der mittelsten Probe des Fensters als den Wert der ersten, der zweiten und der dritten neuen Probe einstellt und der Ausgang des Zweipunktinterpolators, dessen Eingänge die bekannte Proben oberhalb und links von der mittelsten Probe des zweiten Fensters sind, den neuen Wert der mittelsten Probe bildet.

18. Schaltungsanordnung nach Anspruch 13 oder Anspruch 15, dadurch gekennzeichnet, daß der Interpolator, wenn der Ausgang der die Übereinstimmung der Randinformation kontrollierenden Schaltung hinsichtlich der endgültigen Randinformation der mittelsten Probe des zweiten Fensters die Richtung 135° eingestellt hat, den Wert der mittelsten Probe hinsichtlich der zweiten und der dritten neuen Probe verschiebt und der Ausgang des Zwei-Punktinterpolators, dessen Eingang die bekannten Proben oberhalb und rechts von der mittelsten Probe sind, den Wert der ersten neuen Probe bildet.

19. Schaltungsanordnung nach Anspruch 13, dadurch gekennzeichnet, daß der Wert der ersten neuen Probe,wenn der Ausgang der die Übereinstimmung der Randinformation kontrollierenden Schaltung hinsichtlich der endgültigen Randinformation der mittelsten Probe die Richtung 90° eingestellt hat, dem Ausgang des Zweipunktinterpolators entspricht, dessen Eingänge die mittelste bekannte Probe und eine darauffolgende Probe sind, der Wert der zweiten neuen Probe dem Ausgang des Zweipunktinterpolators entspricht, dessen Eingänge die mittelste Probe und eine darunter befindliche bekannte Probe sind, und der Wert einer dritten neuen Probe dem Ausgang des Zweipunktinterpolators entspricht, dessen Eingänge die Probe unterhalb der mittelsten Probe und eine darauffolgende bekannte Probe sind.

20. Schaltungsanordnung nach Anspruch 13, dadurch gekennzeichnet, daß eine erste neue Probe, wenn die die Übereinstimmung der Randinformation kontrollierende Schaltung hinsichtlich der endgültigen Randinformation der mittelsten Probe die Richtung 0° eingestellt hat, dem Wert des Ausgangs des Zweipunktinterpolators entspricht, dessen Eingänge die mittelste Probe und die darauffolgende bekannte Probe sind, eine zweite neue Probe dem Wert des Ausgangs des Zweipunktinterpolators entspricht, dessen Eingänge die mittelste Probe und die bekannte darunter befindliche Probe sind, und die dritte Probe dem Wert des Ausgangs des Zweipunktinterpolators entspricht, dessen Eingänge die mittelste Probe und die bekannte Probe in einer darauffolgenden horizontalen Lage in der darauffolgenden Zeile sind.

21. Schaltungsanordnung nach Anspruch 13, dadurch gekennzeichnet, daß eine erste neue Probe, wenn die die Übereinstimmung der Randinformation kontrollierende Schaltung hinsichtlich der endgültigen Randinformation die Richtung 45° eingestellt hat, dem Wert des Ausgangs des Zweipunktinterpolators entspricht, dessen Eingänge die mittelste Probe und die darauffolgende bekannte Probe sind, eine zweite neue Probe den Wert des Ausgangs des Zweipunktinterpolators entspricht, dessen Eingänge die mittelste Probe und die bekannte angrenzende Probe in der gleichen vertikal darunter befindlichen Zeile sind, und eine dritte neue Probe dem Wert des Ausgangs des Zweipunktinterpolators entspricht, dessen Eingänge die bekannten unmittelbar angrenzenden Proben der besagten neuen Probe in der Richtung 45° sind.

22. Schaltungsanordnung nach Anspruch 13, dadurch gekennzeichnet, daß eine erste neue Probe, wenn die die Übereinstimmung der Randinformation kontrollierende Schaltung hinsichtlich der endgültigen Randinformation die Richtung 135° ergibt, dem Wert des Ausgangs des Zweipunktinterpolators entspricht, dessen Eingänge die mittelste Probe und die nächste bekannte Probe sind, eine zweite neue Probe dem Wert des Ausgangs des Zweipunktinterpolators entspricht, dessen Eingänge die mittelste Probe und die bekannte angrenzende Probe in der gleichen vertikal darunter befindlichen Zeile sind, und eine dritte neue Probe dem Wert des Ausgangs des Zweipunktinterpolators entspricht, dessen Eingänge die bekannten unmittelbar angrenzenden Proben der besagten neuen Probe in der Richtung 135° sind.

**Revendications**

1. Procédé pour doubler verticalement et horizontalement la densité d'échantillons d'une image progressive échantillonnée de façon orthogonale et affichée sur un tube à rayons cathodiques, avec les étapes suivantes :

   - définition d'une taille de bloc
   - calcul de réponses d'opérateurs sur les éléments d'images de ce bloc et
   - interpolation directionnelle en utilisant ces réponses d'opérateurs afin de définir de nouveaux éléments d'image

      caractérisé en ce que

   - trois lignes successives à un instant sont dirigées simultanément dans une fenêtre 3 * 3, ce par quoi, sur la première ligne de la fenêtre, il y a momentanément trois échantillons successifs $f_1$, $f_2$ et $f_3$ de la première ligne, sur la deuxième ligne trois échantillons successifs $f_4$, $f_5$ et $f_6$ de la ligne suivante, et sur la troisième ligne, trois échantillons successifs $f_7$, $f_8$ et $f_9$ de la troisième ligne,
   - des réponses d'opérateurs sont calculées à chaque échantillon de la fenêtre depuis les valeurs d'échantillon de fenêtre dans quatre directions, lesdits opérateurs satisfaisant les formules suivantes

      direction de 0° = $\max(|f_5-f_2|,|f_5-f_8|)$ - $\max\_\min(f_4,f_5,f_6)$
      direction de 90° = $\max(|f_5-f_4|,|f_5-f_6|)$ - $\max\_\min(f_2,f_5,f_8)$
      direction de 45° = $\max(|f_5-f_1|,|f_5-f_9|)$ - $\max\_\min(f_3,f_5,f_7)$
      direction de 135° = $\max(|f_5-f_3|,|f_5-f_7|)$ - $\max\_\min(f_1,f_5,f_9)$

   dans lesquelles la direction de 0° se réfère à la direction de ligne horizontale et $\max\_\min(\ )$ se réfère à la différence de la valeur la plus haute et de la valeur la plus basse entre parenthèses,

   - la direction pour les informations de flanc de l'échantillon le plus au centre fs de la fenêtre, qui a la plus grande réponse d'opérateur, est sélectionnée, ce par quoi les informations de flanc détectent la direction du flanc dans l'image sur l'échantillon le plus au centre fs,

- l'étape précédente est appliquée à tout autre échantillon de la fenêtre afin de sélectionner la direction pour les informations de flanc de chacun desdits échantillons,

- un contrôle de cohérence est réalisé dans la fenêtre 3 * 3, dans lequel les informations de flanc des échantillons sont connues, concernant les informations de flanc de l'échantillon le plus au centre sur la base de la quantité d'informations de flanc des échantillons de la fenêtre, ce par quoi les informations de flanc finales de l'échantillon le plus au centre fs sont obtenues,

- selon les informations de flanc finales ainsi obtenues, les directions d'interpolation sont sélectionnées, dans lesquelles un nouvel échantillon après l'échantillon le plus au centre sur la même ligne, et les deuxième et troisième nouveaux échantillons successifs sur une nouvelle ligne formée après la ligne précédente sont interpolés dans lesdites directions sélectionnées de sorte que le deuxième nouvel échantillon est dans la même position horizontale que l'échantillon le plus au centre.

2. Procédé selon la revendication 1, caractérisé en ce que la valeur de la réponse d'opérateur la plus haute est comparée à une valeur de seuil, et lorsqu'elle est supérieure à la valeur de seuil, pour les informations de flanc de l'échantillon le plus au centre, la direction de la réponse d'opérateur la plus haute est fixée, et lorsqu'elle est inférieure à la valeur de seuil, il n'y aura pas d'informations de flanc.

3. Procédé selon la revendication 2, caractérisé en ce que la valeur de seuil est dans la gamme de 20 à 50.

4. Procédé selon la revendication 1 ou 2, caractérisé en ce que, dans le contrôle de la cohérence des informations de flanc, il est calculé combien de fois des éléments d'images avec les mêmes informations de flanc surviennent dans chaque direction de 0°, de 90°, de 45° et de 135° dans une fenêtre, et la direction est sélectionnée pour les informations de flanc finales de l'échantillon le plus au centre de la fenêtre qui surviennent le plus souvent.

5. Procédé selon la revendication 4, caractérisé en ce que la quantité totale N des occurrences d'informations de flanc dans les échantillons de fenêtre 3 * 3 dans 4 directions est calculée et en ce que, si le nombre N est supérieur au chiffre utilisé pour sélectionner les informations de flanc finales de l'échantillon le plus au centre, les informations de flanc finales sélectionnées sont acceptées.

6. Procédé selon la revendication 1 ou 4, caractérisé en ce que, lorsque les informations de flanc finales produisent une direction de 0° ou de 90° pour la direction du flanc, de nouveaux échantillons sont formés en fixant la valeur de l'échantillon le plus au centre comme leur valeur.

7. Procédé selon la revendication 1 ou 4, caractérisé en ce que, lorsque les informations de flanc finales produisent une direction de 45° pour la direction du flanc, un premier, un deuxième et un troisième nouveaux échantillons sont formés en fixant la valeur de l'échantillon le plus au centre de la fenêtre pour leur valeur et la moyenne de l'échantillon connu au-dessus de celui-ci et à sa gauche est substituée à l'échantillon le plus au centre.

8. Procédé selon la revendication 1 ou 4, caractérisé en ce que, lorsque les informations de flanc finales produisent une direction de 135° pour la direction du flanc, un deuxième et un troisième nouveaux échantillons sont formés en fixant la valeur de l'échantillon le plus au centre pour leur valeur, et en ce qu'un premier nouvel échantillon est formé en tant que moyenne de l'échantillon connu au-dessus de l'échantillon le plus au centre et en tant que moyenne de l'échantillon connu sur son côté droit.

9. Procédé selon la revendication 1 ou 4, caractérisé en ce que, lorsque les informations de flanc finales produisent une direction de 90° pour la direction du flanc, un premier nouvel échantillon est interpolé en tant que moyenne des échantillons voisins immédiats connus de la même ligne, un deuxième nouvel échantillon est interpolé en tant que moyenne des échantillons voisins immédiats connus de la direction verticale et un troisième nouvel échantillon est déduit en tant que moyenne des échantillons voisins immédiats connus de la ligne sous de celle-ci.

10. Procédé selon la revendication 1 ou 4, caractérisé en ce que, lorsque les informations de flanc finales produisent une direction de 0° pour la direction du flanc, un premier nouvel échantillon est interpolé en tant que moyenne des échantillons voisins immédiats connus de la même ligne, un deuxième nouvel échantillon est interpolé en tant que moyenne des échantillons voisins immédiats connus de la direction verticale et un troisième nouvel échantillon est déduit en tant que moyenne des échantillons voisins immédiats connus de la ligne verticale suivante.

11. Procédé selon la revendication 1 ou 4, caractérisé en ce que, lorsque les informations de flanc finales produisent une direction de 45° pour la direction du flanc, un premier nouvel échantillon est interpolé en tant que moyenne des échantillons voisins immédiats connus de la même ligne, un deuxième nouvel échantillon est interpolé en tant que moyenne des échantillons voisins immédiats connus dans la même direction verticale et un troisième nouvel échantillon est interpolé en tant que moyenne des échantillons voisins immédiats connus dans une direction de 45°.

12. Procédé selon la revendication 1 ou 4, caractérisé en ce que, lorsque les informations de flanc finales produisent une direction de 135° pour la direction du flanc, un premier nouvel échantillon est interpolé en tant que moyenne des échantillons voisins immédiats connus de la même ligne, un deuxième nouvel échantillon est interpolé en tant qu'une moyenne des échantillons voisins immédiats connus dans la même direction verticale et un troisième nouvel échantillon est interpolé en tant que moyenne des échantillons voisins immédiats connus dans une direction de 135°.

13. Agencement de circuit pour doubler verticalement et horizontalement la densité d'échantillons d'une image progressive échantillonnée de façon orthogonale et affichée sur un tube à rayons cathodiques, comprenant un moyen conçu pour

- la définition d'une taille de bloc
- le calcul de réponses d'opérateurs sur les éléments d'images de ce bloc et
- l'interpolation directionnelle en utilisant ces réponses d'opérateurs afin de définir de nouveaux éléments d'image

  caractérisé en ce que le circuit comprend

- un premier circuit fonctionnant dans une fenêtre d'échantillons 3 * 3, son entrée comprenant simultanément trois lignes, ce par quoi sur la première ligne de la fenêtre il y a momentanément trois échantillons successifs $f_1$, $f_2$ et $f_3$ de la première ligne, sur la deuxième ligne trois échantillons successifs $f_4$, $f_5$ et $f_6$ de la ligne suivante, et sur la troisième ligne, trois échantillons successifs $f_7$, $f_8$ et $f_9$ de la troisième ligne,
- un circuit de calcul pour des réponses d'opérateurs provenant des valeurs d'échantillon de fenêtre dans quatre directions, qui calcule à chaque échantillon de la fenêtre les réponses d'opérateurs selon les formules suivantes

  direction de 0° = max($|f_5-f_2|$,$|f_5-f_8|$) - max_min($f_4$,$f_5$,$f_6$)
  direction de 90° = max($|f_5-f_4|$,$|f_5-f_6|$) - max_min($f_2$,$f_5$,$f_8$)
  direction de 45° = max($|f_5-f_1|$,$|f_5-f_9|$) - max_min($f_3$,$f_5$,$f_7$)
  direction de 135° = max($|f_5-f_3|$,$|f_5-f_7|$) - max_min($f_1$,$f_5$,$f_9$)

dans lesquelles la direction de 0° se réfère à la direction de ligne horizontale et max_min( ) se réfère à la différence de la valeur la plus haute et de la valeur la plus basse entre parenthèses,

- un circuit de sélection pour les informations de flanc de l'échantillon le plus au centre fs et de tout autre échantillon de la fenêtre qui sélectionne la direction avec la réponse d'opérateur la plus grande à chacun desdits échantillons,
- un circuit pour contrôler la cohérence de fonctionnement dans la fenêtre 3 * 3, concernant les informations de flanc de l'échantillon le plus au centre fs sur la base de la quantité d'informations de flanc des échantillons de fenêtres, ce par quoi la sortie forme les informations de flanc finales de l'échantillon le plus au centre fs,
- des interpolateurs qui interpolent dans lesdites directions sélectionnées sur la base des informations de flanc finales ainsi obtenues, un nouvel échantillon après l'échantillon le plus au centre sur la même ligne, et les deuxième et troisième nouveaux échantillons successifs sur une nouvelle ligne formée après la ligne précédente de sorte que le deuxième nouvel échantillon est dans la même position horizontale que l'échantillon le plus au centre.

14. Agencement de circuit selon la revendication 13, caractérisé en ce qu'un moyen formant comparateur a été connecté au circuit de calcul des réponses d'opérateur, ses entrées étant la valeur de la réponse d'opérateur la plus haute et la valeur de seuil sélectionnée, et en ce que, lorsque la valeur de la réponse est supérieure à la valeur de seuil, la sortie du moyen formant comparateur fixe les informations de direction de la réponse d'opérateur la plus haute pour les informations de flanc de l'échantillon le plus au centre de la première fenêtre.

15. Agencement de circuit selon la revendication 13 et 14, caractérisé en ce qu'un circuit connecté à la seconde fenêtre, contrôlant la cohérence des informations de flanc, calcule combien de fois les éléments d'image avec les mêmes informations de flanc surviennent dans chaque direction de 0°, de 90°, de 45° et de 135° dans une fenêtre, et en ce que la sortie du circuit fixe pour les informations de flanc finales de l'échantillon le plus au centre de la fenêtre la direction qui survient le plus souvent.

16. Agencement de circuit selon la revendication 13 ou 15, caractérisé en ce que, lorsque la sortie du circuit contrôlant la cohérence des informations de flanc a fixé une direction de 0° ou une direction de 90° pour les informations de flanc finales de l'échantillon le plus au centre de la seconde fenêtre, l'interpolateur fixe la valeur de l'échantillon le plus au centre pour la valeur des premier, deuxième et troisième nouveaux échantillons de la seconde fenêtre.

17. Agencement de circuit selon la revendication 13 ou 15, caractérisé en ce que, lorsque la sortie du circuit contrôlant la cohérence des informations de flanc a fixé une direction de 45° pour les informations de flanc finales de l'échantillon le plus au centre de la seconde fenêtre, l'interpolateur fixe la valeur de l'échantillon le plus au centre de la fenêtre pour la valeur des premier, deuxième et troisième nouveaux échantillons, et en ce que la sortie de l'interpolateur à deux points, ses entrées étant l'échantillon connu au-dessus et sur le côté gauche de l'échantillon le plus au centre de la seconde fenêtre, est la nouvelle valeur de l'échantillon le plus au centre.

18. Agencement de circuit selon la revendication 13 ou 15, caractérisé en ce que, lorsque la sortie du circuit contrôlant la cohérence des informations de flanc a fixé une direction de 135° pour les informations de flanc finales de l'échantillon le plus au centre de la seconde fenêtre, l'interpolateur décale la valeur de l'échantillon le plus au centre pour les deuxième et troisième nouveaux échantillons, et en ce que la sortie de l'interpolateur à deux points, ses entrées étant les échantillons connus au-dessus et sur le côté droit de l'échantillon le plus au centre, est la valeur du premier nouvel échantillon.

19. Agencement de circuit selon la revendication 13, caractérisé en ce que, lorsque la sortie du circuit contrôlant la cohérence des informations de flanc a fixé une direction de 90° pour les informations de flanc finales de l'échantillon le plus au centre, la valeur du premier nouvel échantillon est la sortie de l'interpolateur à deux points dans lequel les entrées sont l'échantillon connu le plus au centre et l'échantillon suivant, la valeur du deuxième nouvel échantillon est la sortie de l'interpolateur à deux points dans lequel les entrées sont l'échantillon le plus au centre et un échantillon connu au-dessous de celui-ci et la valeur d'un troisième nouvel échantillon est la sortie de l'interpolateur à deux points dans lequel les entrées sont l'échantillon au-dessous de l'échantillon le plus au centre et un échantillon connu suivant.

20. Agencement de circuit selon la revendication 13, caractérisé en ce que, lorsque le circuit contrôlant la cohérence des informations de flanc a fixé une direction de 0° pour les informations de flanc finales de l'échantillon le plus au centre, un premier nouvel échantillon est la valeur de la sortie de l'interpolateur à deux points dans lequel les entrées sont l'échantillon le plus au centre et l'échantillon connu suivant, un deuxième nouvel échantillon est la valeur de la sortie de l'interpolateur à deux points dans lequel les entrées sont l'échantillon le plus au centre et l'échantillon connu au-dessous de celui-ci et le troisième échantillon est la valeur de la sortie de l'interpolateur à deux points dans lequel les entrées sont l'échantillon le plus au centre et l'échantillon connu dans une position horizontale suivante dans la ligne suivante.

21. Agencement de circuit selon la revendication 13, caractérisé en ce que, lorsque le circuit contrôlant la cohérence des informations de flanc produit une direction de 45° pour les informations de flanc finales, un premier nouvel échantillon est la valeur de la sortie de l'interpolateur à deux points dans lequel les entrées sont l'échantillon le plus au centre et l'échantillon connu suivant, un deuxième nouvel échantillon est la valeur de la sortie de l'interpolateur à deux points dans lequel les entrées sont l'échantillon le plus au centre et l'échantillon voisin connu dans la même ligne verticale au-dessous de celui-ci, et un troisième nouvel échantillon est la valeur de la sortie de l'interpolateur à deux points dans lequel les entrées sont les échantillons voisins connus immédiats dudit nouvel échantillon connu dans une direction de 45°.

22. Agencement de circuit selon la revendication 13, caractérisé en ce que, lorsque le circuit contrôlant la cohérence des informations de flanc produit une direction de 135° pour les informations de flanc finales, un premier nouvel échantillon est la valeur de la sortie de l'interpolateur à deux points dans lequel les entrées sont l'échantillon le plus au centre et l'échantillon connu suivant, un deuxième nouvel échantillon est la valeur de la sortie de l'interpolateur à deux points dans lequel les entrées sont l'échantillon le plus au centre et l'échantillon voisin connu dans la même ligne verticale au-dessous de celui-ci, et un troisième nouvel échantillon est la valeur de la sortie de l'interpolateur à deux points dans lequel les entrées sont les échantillons voisins connus immédiats dudit nouvel échantillon connu dans une direction de 135°.

(a) EDGE DIRECTION ↕

(b) EDGE DIRECTION ↔

(c) EDGE DIRECTION ⤢

(d) EDGE DIRECTION ⤡

Fig. 1

Fig. 3

| f1 | f2 | f3 |
|----|----|----|
| f4 | f5 | f6 |
| f7 | f8 | f9 |

Fig. 2

(a) EDGE DIRECTION ↕

(b) EDGE DIRECTION ↔

(c) EDGE DIRECTION ↗

(d) EDGE DIRECTION ↘

◻• ORIGINAL SAMPLE

◻ NEW SAMPLE

⟶ 2-POINT LINEAR INTERPOLATION

⟹ INSERTION OF ORIGINAL SAMPLE

Fig. 4

(a) EDGE DIRECTION

(b) EDGE DIRECTION

(c) EDGE DIRECTION

(d) EDGE DIRECTION

Fig. 5